(19) Europäisches Patentamt
European Patent Office
Office européen des brevets

(11) Publication number: **0 306 334 B1**

(12) **EUROPEAN PATENT SPECIFICATION**

(45) Date of publication of patent specification: **08.07.92** (51) Int. Cl.5: **B01J 20/32**, C22B 3/00

(21) Application number: **88308158.0**

(22) Date of filing: **02.09.88**

(54) **Macrocyclic ligands bonded to silica or silica gel and their use in selectively and quantitatively removing and concentrating ions present at low concentrations from mixtures thereof with other ions.**

(30) Priority: **04.09.87 US 93544**

(43) Date of publication of application:
**08.03.89 Bulletin 89/10**

(45) Publication of the grant of the patent:
**08.07.92 Bulletin 92/28**

(84) Designated Contracting States:
**DE FR GB IT NL SE**

(56) References cited:
**DE-A- 3 644 346**
**FR-A- 2 570 075**
**US-A- 4 142 020**
**US-A- 4 539 399**

**JOURNAL OF CHROMATOGRAPHY, vol. 201, 1980, pages 147-166, Elsevier Scientific Publishing Co., Amsterdam, NL; E. BLASIUS et al.: "Preparation, characterization and application of ion exchanges with cyclic polyether anchor groups"**

(73) Proprietor: **BRIGHAM YOUNG UNIVERSITY**

**Provo Utah 84602(US)**

(72) Inventor: **Bradshaw, Jerald S.,**
**1616 Oak Lane,**
**Provo, Utah 84604(US)**
Inventor: **Izaat Reed M.,**
**3624 Little Rock Drive,**
**Provo, Utah 84604(US)**
Inventor: **Bruening, Ronald L.,**
**1260 East 820 North,**
**Provo, Utah 84661(US)**
Inventor: **Christensen, James J.**
**/**
**Deceased(US)**

(74) Representative: **Kearney, Kevin David Nicholas et al**
**KILBURN & STRODE 30 John Street**
**London, WC1N 2DD(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services

## Description

The present invention comprises a composition of matter and a process of using it. The composition of matter comprises silica, e.g. sand or silica gel, having a covalent bond to certain macrocyclic compounds through a hydrocarbon chain with or without an ether oxygen linkage. These certain macrocyclic compounds have at least four - A - $CH_2$ - $CH_2$ - groups in which A is selected from 0, 0 - $CH_2$, S, S - $CH_2$, N - R, and N - (R) - $CH_2$ in which R is selected from H, lower alkyl, and benzyl and the hydrocarbon chain has an end group

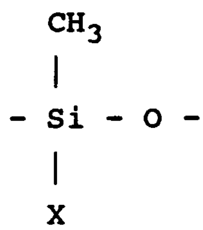

covalently bonded to silica in which X is selected from lower alkyl, phenyl, benzyl, halogen, - O - $CH_3$, - O-$C_2H_5$, and - 0 - Si = .

Representative families of compounds contemplated by the present invention are illustrated by the following structural formulae I to V.

According to the present invention a composition of matter comprises silica covalently bonded to a macrocyclic compound and having the formula I, II, III, IV or V below:

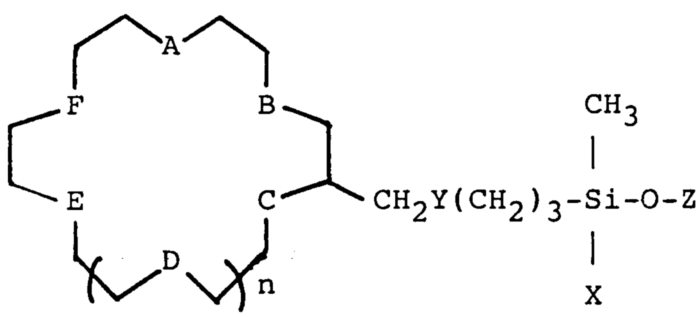

(I)

in which A to F each separately represent an oxygen atom or a sulphur atom or an N-R group in which R represents a hydrogen atom or an alkyl group preferably lower alkyl, e.g. $C_1$-$C_4$ alkyl, or an aryl group, preferably phenyl alkyl or lower alkyl, e.g. $C_1$-$C_4$, phenyl, or benzyl, n is 0, 1, 2, 3 or 4, Z represents silica or silica gel, X represents an alkyl group, preferably methyl or ethyl, or an aryl group e.g. phenyl, or an alkoxy group e.g. methoxy or ethoxy or a halogen atom e.g. a chlorine atom or an O-silica group or an O-silica gel group, and Y represents an oxygen atom or a $CH_2$ group; or

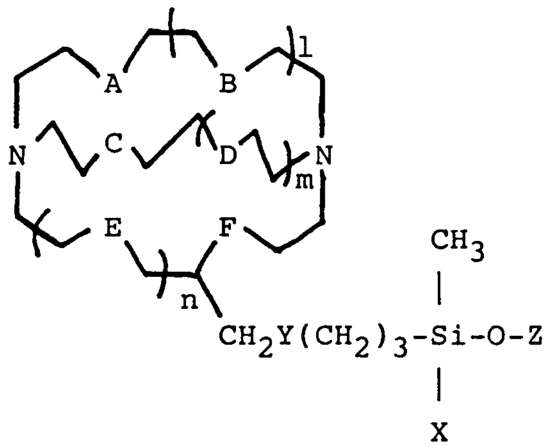

(II)

in which A to F each separately represent an oxygen atom or a sulphur atom or an N-R group in which R represents a hydrogen atom or an alkyl group, preferably lower alkyl, e.g. $C_1$-$C_4$ alkyl, or an aryl group, preferably phenyl alkyl or lower alkyl, e.g. $C_1$-$C_4$,phenyl, or benzyl, m and n are 0, 1 or 2, Z represents silica or silica gel, X represents an alkyl group, preferably methyl or ethyl, or an aryl group e.g. phenyl, or alkoxy group e.g. methoxy or ethoxy or a halogen atom e.g. a chlorine atom or an O-silica group or an O-silica gel group and Y represents an oxygen atom or a $CH_2$ group; or

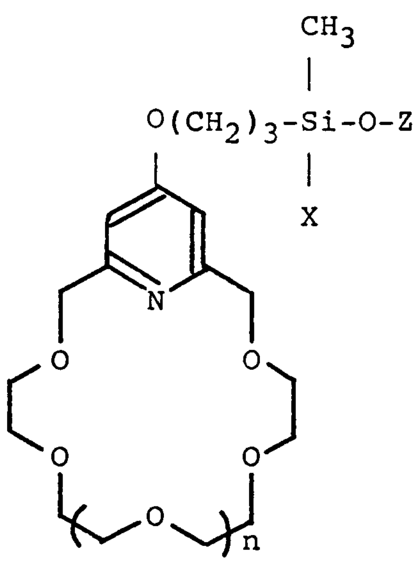

(III)

in which n is 0, 1 or 2, Z represents silica or silica gel, and X represents an alkyl group preferably methyl or ethyl, or an aryl group, e.g. phenyl or an alkoxyl group, e.g. methoxy or ethoxy, or a halogen atom or an O-silica group or an O-silica gel group, Y represents an oxygen atom or a $CH_2$ group; or

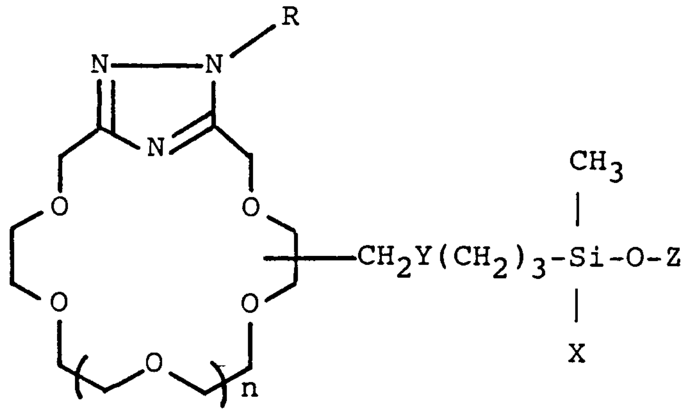

(IV)

in which n is 0, 1 or 2, Z represents silica or silica gel, R represents an alkyl group or an aryl group and X represents an alkyl group or an aryl group or an alkoxyl group or a halogen atom or an O-silica group or an O-silica gel group, Y represents an oxygen atom or a $CH_2$ group; or

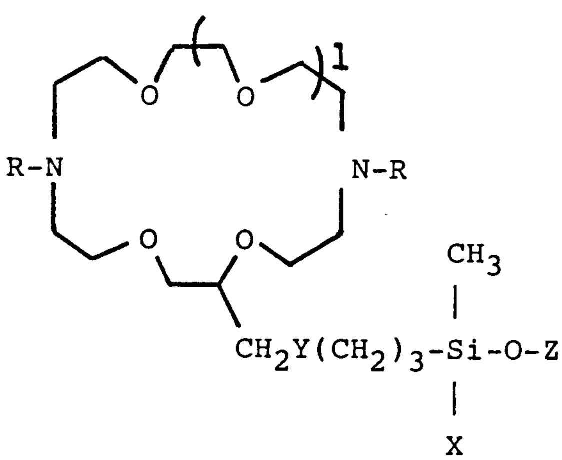

(V)

in which l is 0, 1 or 2, Z represents silica or silica gel, R represents a hydrogen atom or an alkyl group preferably lower alkyl, e.g. $C_1$ -$C_4$ alkyl, or an aryl group, preferably phenyl alkyl or lower alkyl, e.g. $C_1$-$C_4$,phenyl, or benzyl, and X represents an alkyl group, preferably methyl or ethyl, or an aryl group e.g. phenyl, or alkoxy group e.g. methoxy or ethoxy or a halogen atom e.g. a chlorine atom or an O-silica group or an O-silica gel group, and Y represents an oxygen atom or a $CH_2$ group.

In one form of compounds I and II R may represent a hydrogen atom or an alkyl group or a benzyl group and X may represent an alkyl group or a chlorine atom or an O-silica group, and Y represents an oxygen atom.

In one form of compound III Y represents an oxygen atom and X may represent a methyl group, a chlorine atom or an O-silica group.

In one from of compound IV Y represents an oxygen atom, R represents a methyl group, a chlorine atom or an O-silica group.

In one form of compound V Y represents an oxygen atom, R represents a hydrogen atom or an alkyl group or a benzyl group, and X represents a methyl group or an O-silica group.

The silica may be sand.

In one preferred form of the invertion in Formula I, A to F each represent an oxygen atom, n is 0, 1 or 2 and X represents a methyl group or a chlorine atom or an O-silica group or an O-silica gel group; and in Formula II, A to F each represent an oxygen atom, , m and n each are 1, and X represents a methyl group or a chlorine atom or an O-silica group or an O-silica gel group.

In an especially preferred form of Formula I, A, C, D and F each represent an oxygen atom and B and E each represent any N-R group in which R represents a hydrogen atom or any alkyl group or any benzyl group, n is 0, 1 or 2, and X represents a methyl group or a chlorine atom or an O-silica group or an O-silica

gel group.

In an especially preferred form of Formula II, A to F each represent an oxygen atom, m and n each are 1 and is 0, 1 or 2 and X represents a methyl group or a chlorine atom or an O-silica gel group and Z represents an O-silica gel group.

The process comprises selectively and quantitatively removing and concentrating a selected ion or group of ions present at low concentrations from a plurality of other ions in a multiple ion solution in which the other ions may be present at much higher concentrations by bringing the multiple ion solution into contact with a composition of matter in accordance with the present invention. The preferred embodiment disclosed herein involves carrying out the process by bringing a large volume of the multiple ion solution into contact with a compound of the invention as an addition compound to silica preferably in the form of sand or silica gel in a separation column through which the mixture is first flowed to complex the desired ion or ions with the said compound followed by the flow through the column of a small volume of a receiving liquid to break the complex by chemical or thermal means, dissolve the desired ions and carry them out of the column. Other equivalent apparatus may be used instead of a column, e.g. a slurry which is filtered, washed with a receiving liquid to break the complex and recover the desired ion. The desired metal ions are then recovered from the receiving phase by well known procedures.

More particularly, the process comprises forming a chemical covalent bond between silica, preferably as sand or silica gel, and at least one of the compounds, placing the resulting bonded silica compound in a contacting device such as a tall column, causing a large volume of the mixture of ions to flow through the column where the desired ions complex with the bonded silica compound which separates them from the rest of the mixture which flows out of the column, then flowing a small volume of the receiving liquid through the column to break the complex and dissolve and carry out of the column the desired ion(s). The desired metal ions are then recovered from the receiving liquid by well known procedures.

It is known that macrocyclic polyethers and other macrocyclic ligands present as solutes in a solvent such as water are characterised by their ability to selectively form strong bonds with particular ions or groups of ions present as solutes in the same solvent according to size, donor atom-related and other well known selectivity rules as noted in articles by R.M. Izatt, J.S. Bradshaw, S.A. Nielsen, J.D. Lamb, J.J. Christensen, and D. Sen, THERMODYANMIC AND KINETIC DATA FOR CATION-MACROCYCLE INTERACTION, Chem. Rev., 1985, 271-339 and by L.F. Lindoy, in PROGRESS IN MACROCYCLIC CHEMISTRY, edited by R.M. Izatt and J.J. Christensen, JOHN WILEY & SONS, pages 53-92 (1987). However, researchers have not previously been able to incorporate macrocycles into separation systems where the behaviour of the macrocycle in the separation system in comparison to that of the macrocycle as a solute is unchanged and/or the macrocycle will remain in the separation system. Articles such as those entitled ION-CHROMATOGRAPHIC SEPARATION OF SILICA GRAFTED WITH BENZO-18-CROWN-6 ETHER by M. Lauthard and Ph. Germain, J. Liquid Chromatogr., 1985, Vol. 8, 2403-2415, and ION-CHROMATOGRAPHY ON POLY (CROWN ETHER-MODIFIED) SILICA POSSESSING HIGH AFFINITY FOR SODIUM by M. Nakajima, K. Kumura, E. Hayata, and T. Shono, J. Liquid Chromatogr., 1984, Vo. 7, 2115-2125, have disclosed the bonding of crown ethers to silica gels but they and most other reported macrocycle bonded silicas contain a benzene group or other electron withdrawing groups as part of a macrocycle side chain which reduces the ability of the macrocycle to bond with ions in comparison to the situation where the macrocycle and ions are present as solutes in solution. The only other reported examples of bonding of macrocycles to sand or silica gel have involved bonding via a side chain connected to one of the electron rich macrocycle donor atoms, i.e. nitrogen. One such reference is entitled AN OXYGEN-NITROGEN DONOR MACROCYCLE IMMOBILIZED ON SILICA GEL. A REAGENT SHOWING HIGH SELECTIVITY FOR Cu(II) IN THE PRESENCE OF Co(II), Ni(II) OR Zn(II), by V. Dudler, L.F. Lindoy, D. Sallin and C.W. Schlaepfer, Aust. J. Chem., submitted for publication. However, such bonding changes the geometry of the compound and greatly reduces the ability of the macrocycle to interact with ions. Prior researchers in this field confined their research to analytical chromatographic applications and disclosed no concept of industrial separation applications where strong macrocycle-ion bonding is required to quantitatively recover the desired ion(s) from solution and high selectivity is required to obtain a product free from contaminants. The strength of macrocycle-ion bonding is particularly important when ions present in solution at low concentrations need to be recovered. The greater the value of the equilibrium constant for ion-macrocycle interaction, the lower the initial concentration of the ion in solution can be and still be efficiently and quantitatively complexed. Hence, the ability to attach these macrocycles to sand or silica gel without reducing the ability of the macrocycle to complex ions is of the utmost importance in the industrial use of macrocycles. The process of the present invention successfully accomplishes this feat.

The compounds of the present invention comprise certain macrocyclic ligands covalently bonded to silica, e.g. sand or silica gel. The compounds are identified above. The process of the present invention

uses the compounds, which are characterised by high selectivity for and removal of desired metal ions or groups of metal ions present at low concentrations from the source phase containing a mixture of metal ions with the ions one does not desire to remove frequently present in much greater concentrations in the solution, in a separation device such as a column through which the solution is flowed. The process of selectively removing and concentrating the desired ion(s) is characterised by the ability to quantitatively complex from a large volume of solution the desired ion(s) when they are present at low concentrations. The said ions are recovered from the separation column by flowing through it a small volume of a receiving phase which contains a solubilizing reagent which need not be selective, but which will strip the ions from the macrocyclic ligand quantitatively. The recovery of the desired metal ions from the receiving phase is easily accomplished by well known procedures.

The invention may be put into practice in a number of ways and one specific embodiment will be described by way of example with reference to the accompanying drawings in which:

Figure 1 represents schematically a suitable column for holding the silica-macrocyclic ligand (crown) material through which a solution of metal ions can be flowed to complex selectively with a desired ion or group of ions in accordance with the invention;

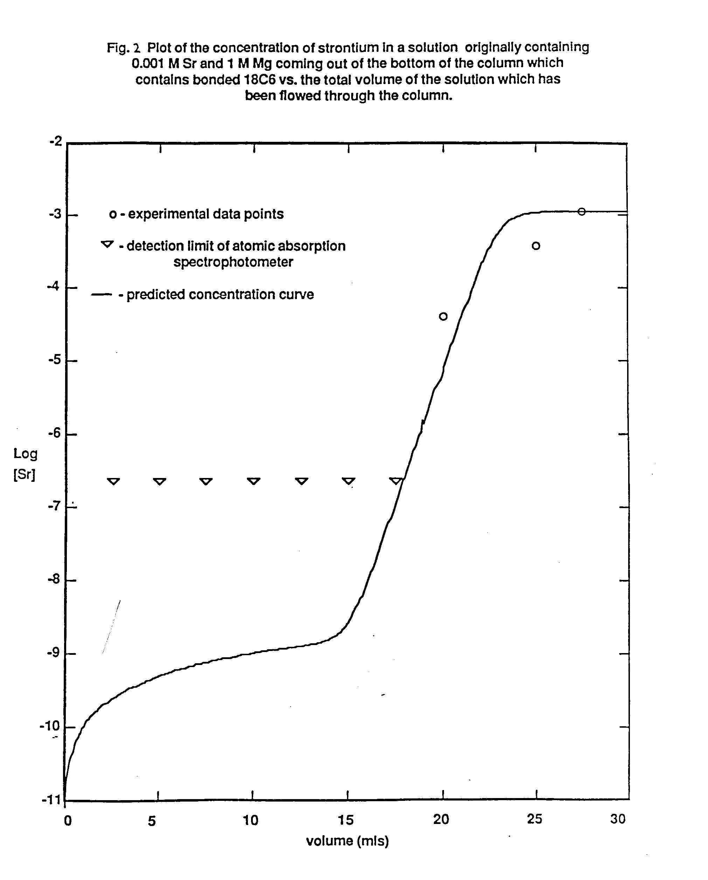

Figure 2 represents a graph of the predicted(o points) and actual(curve) remaining amounts of $Sr^{2+}$ in a solution initially containing 1 M $MgCl_2$ and 0.001 M $SrCl_2$ after flowing the solution through an 18-crown-6 bonded silica gel column (see Formula IIA below) vs. the amount of volume of the solution which has been passed through the column. The analytical detection limit is listed for those experimental points where no $Sr^{2+}$ could be detected.

Macrocycles which do not contain electron withdrawing groups and which are capable of being bonded to silica must be synthesized. Then the macrocycle must be covalently bonded to the sand or silica gel.

One method of preparing the compounds of Formula I for example, is to react the allyloxy forms of the crowns with chlorodimethylsilane (or dichloromethylsilane) followed by heating the resulting chlorosilane (or dichlorosilane) with silica as follows:

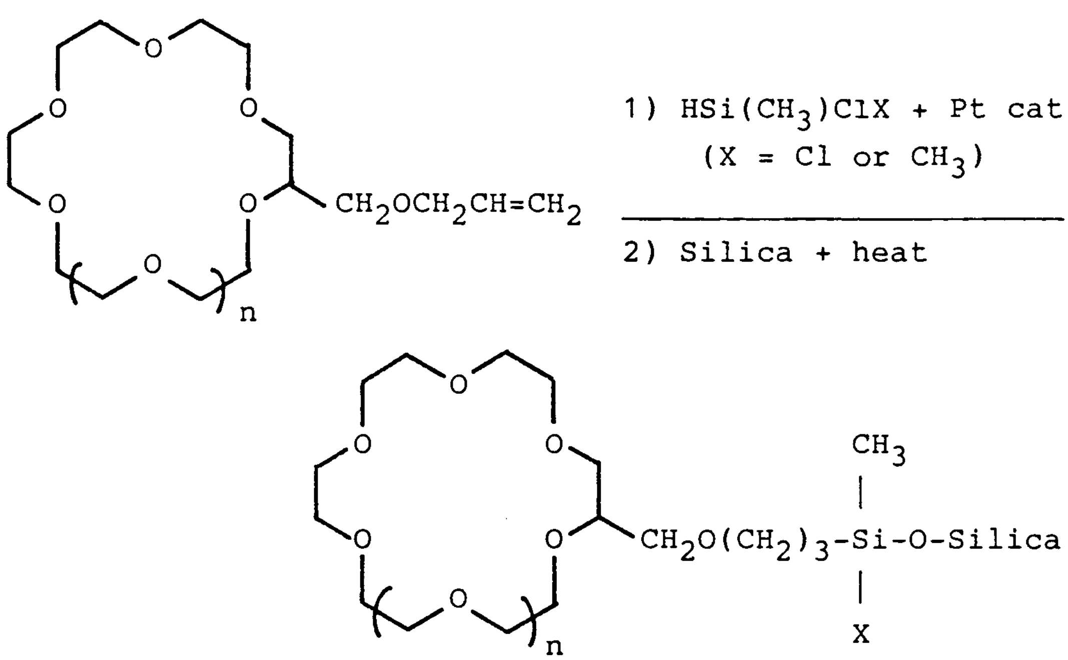


(I)

n = 0 or 1 or 2

X = $CH_3$ or Cl or O-Silica

The synthesis of the allyloxy forms of the crowns, which is not part of the present invention, is described in an article entitled FACILE SYNTHESIS OF HYDROXYMETHYLCROWN ETHERS by I. Ikeda, H.E. Mura and M. Okahara, Synthesis pages 73 and 74(1984).

A method for preparing the macrocyclic compounds Formula II is to react the cryptand compound

having a $-CH_2-O-CH_2CH==CH_2$ side chain with chlorodimethylsilane (or dichloromethylsilane) in the presence of a platinum catalyst to convert the side chain to $-CH_2-O-(CH_2)_3-Si(CH_3)ClX$ (where X = (Cl or $CH_3$) and heating this compound with silica as follows:

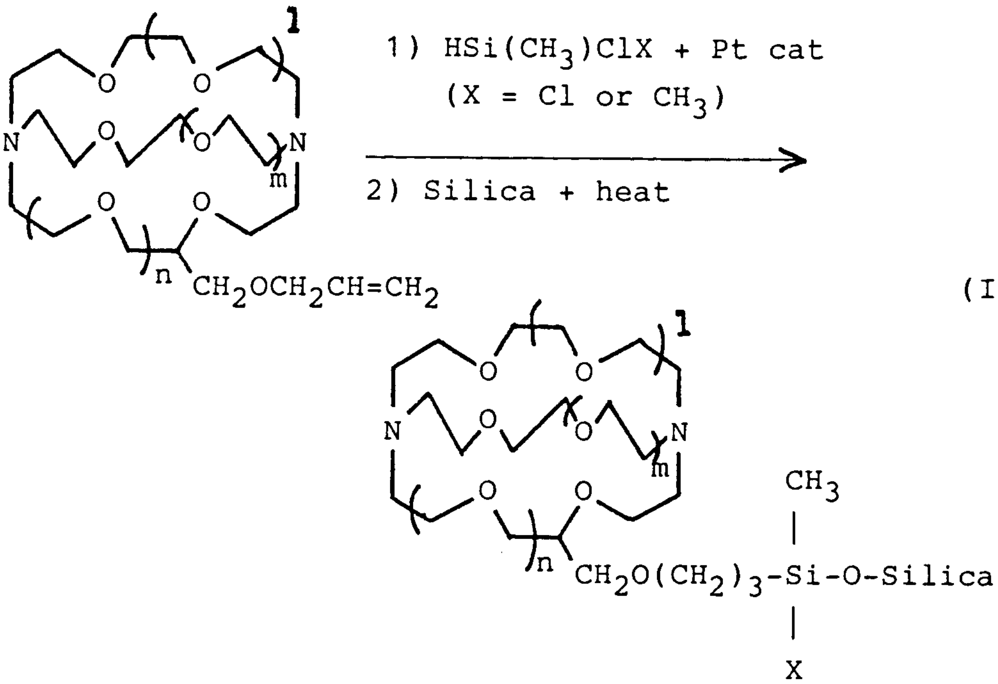


(II)

l = 0 or 1 or 2

m = 0 or 1 or 2

n = 0 or 1 or 2

X = $CH_3$ or Cl or O-Silica

The synthesis of the $-CH_2-O-CH_2CH==CH_2$ substituted 2.2.2 cryptand (l = n = 1) which is not part of the present invention, is described in an article entitled SYNTHESIS OF HYDROXYMETHYL-FUNCTIONALIZED DIAZACROWNS AND CRYPTANDS by David A. Babb, Bronislaw P. Czech and Richard A. Bartsch, J. Heterocyclic Chem., Vol. 23, pages 609-613 (1986).

A method of preparing the macrocyclic compounds of Formula III, for example, is to react 4-allyloxypyridino-18-crown-6 with chlorodimethylsilane (or dichloromethylsilane) and heating the resulting chlorosilane and silica as follows:

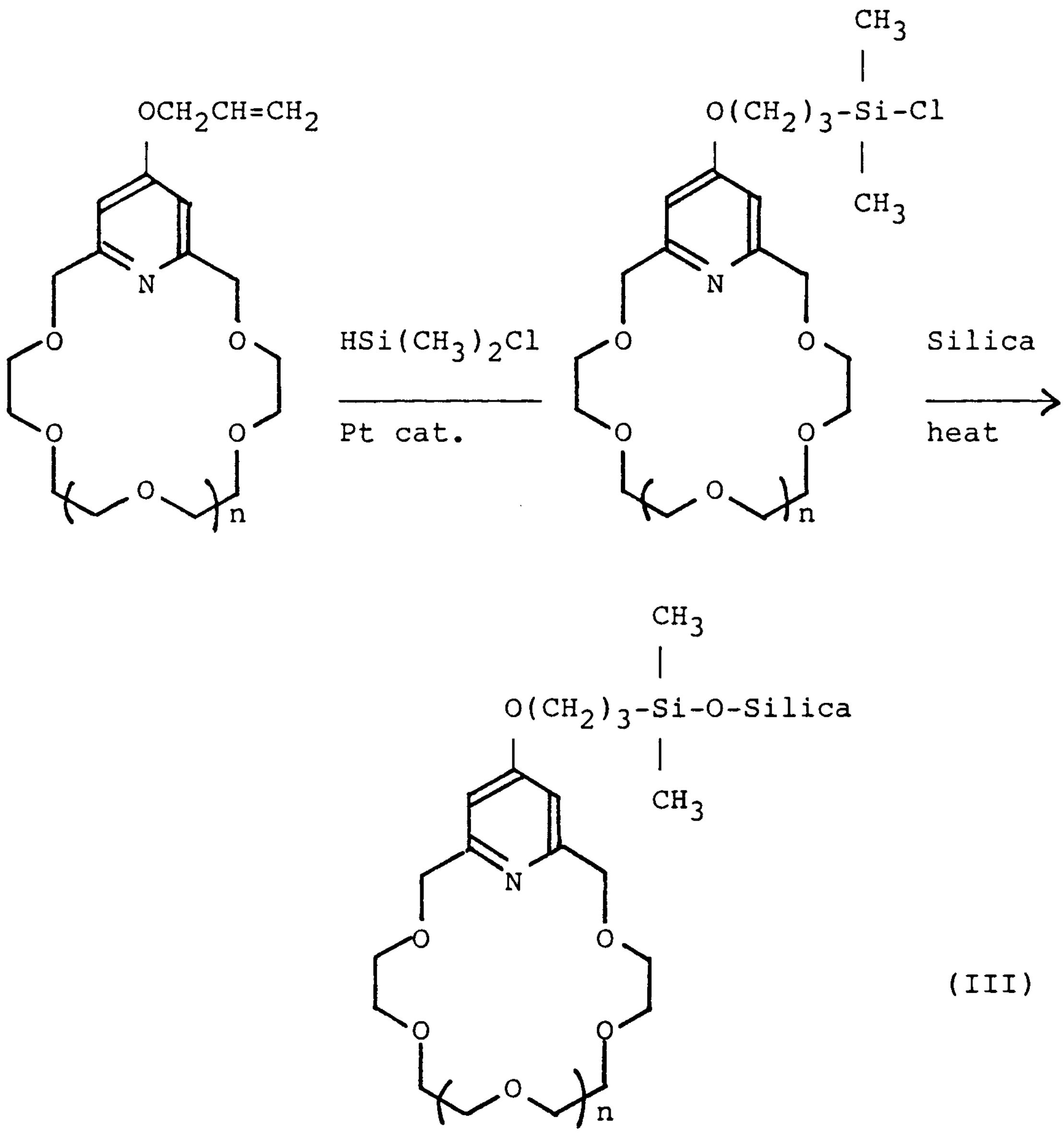


(III)

n = 0-2; X = $CH_3$ or Cl or O-Silica

The synthesis of 4-allyloxypyridino-18-crown-6 (where n = 1), which is not part of the present invention, is described in an article entitled PROTON-IONIZABLE CROWN ETHERS. 3. SYNTHESIS AND STRUCTURAL STUDIES OF MACROCYCLIC POLYETHER LIGANDS CONTAINING A 4-PYRIDONE SUBCYCLIC UNIT, by Jerald S. Bradshaw, Yohji Nakatsuji, Peter Huszthy, Bruce E. Wilson, N. Kent Dalley and Reed M. Izatt, J. Heterocyclic Chem. Vol. 23, pages 353-360 (1986).

It should be emphasised that any macrocycle which can be synthesized with a $-CH_2-O-CH_2CH==CH_2$ side chain or the like attached to one of the regular carbon atoms of the macrocycle could then be covalently bonded to silica e.g. sand or silica gel. The processes for making the compounds in accordance with the present invention which have just been described, all involve bonding to silica by heating the cyclic compound with silica. When it is wished to bond the cyclic compound to silica gel the cyclic compound is heated with silica gel instead of silica. The interaction properties of this bonded macrocycle will not differ from those of the unsubstituted macrocycle present as a solute in solution when such a macrocycle does not contain electron withdrawing substituent groups and the bonding to sand or silica gel does not occur via one of the macrocycle donor atoms. This will now be described in more detail in the following description of the metal ion recovery and concentration process.

The metal ion recovery and concentration process of the invention relates to the selective recovery of desired metal ions from mixtures thereof with other metal ions using the compounds of the invention as

defined above. Effective methods of recovery and/or separation of metal ions, particularly silver, lead, cadmium, and other heavy metals, from one another in culinary water supplies, waste solutions, deposits and industrial solutions and silver recovery from waste solutions, e.g. from emulsions on photographic and X-ray film, represent a real need in modern technology. These ions are typically present at low concentrations in solutions containing other ions at much greater concentrations. Hence, there is a real need for a process to selectively recover and concentrate these hazardous and/or desirable ions. The present invention accomplishes this separation effectively and efficiently by the use of compounds selected from the families represented by the formulae I to V.

The process first involves selecting a macrocycle-bonded silica where the particular macrocycle will selectively complex the ion(s) of interest. There is a large data base for measurements of macrocycle-ion interactions where the macrocycle is unsubstituted and present as a solute in a solvent. Much of this data base is presented in an article by R.M. Izatt, J.S. Bradshaw, S.A. Nielsen, J.D. Lamb, J.J. Christensen, and D. Sen, THERMODYNAMIC AND KINETIC DATA FOR CATION-MACROCYCLE INTERACTION, Chem. Rev. Vol. 23, 271-339 (1985). Previously, this data base has only provided general qualitative predictions about the behaviour of macrocycles incorporated into separation processes. However, in the process of the invention the equilibrium constants for ion-macrocycle interaction for macrocycles present as solutes in solution vs. that for macrocycles bonded to silica show little or no variation. Data comparing the interaction of several ions with both types of the macrocycle 18-crown-6 are given as an example of this point in Table 1.

TABLE 1

Comparison of Aqueous Equilibrium Constants for 1:1 Cation-18-Crown-6 Interaction with the Macrocycle Free in Solution vs. being Bound to Silica Gel

| Cation | Log K[a] Free Macrocycle | Log K[a] Bound Macrocycle |
|---|---|---|
| $Sr^{2+}$ | 2.72 | 2.6[b] |
| $Tl^{+}$ | 2.27 | 2.2[b] |
| $Ba^{2+}$ | 3.87 | 3.7[b] |
| $Pb^{2+}$ | 4.27 | 4.0[c] |
| $Ni^{2+}$ | 0 | 0.2[b] |

Notes on Table 1

a) Log K values for the free macrocycle, which are not part of the present invention, are taken from R.M. Izatt, J.S. Bradshaw, S.A. Nielsen, J.D. Lamb, J.J. Christensen, and D. Sen, THERMODYNAMIC AND KINETIC DATA FOR CATION-MACROCYCLE INTERACTION, Chem. Rev., Vol. 85, 271-339 (1985). Log K values for the bound macrocycle were determined by us.

b) Ionic strength = 3M.

c) Ionic strength = 1M.

It is emphasised that similar interaction with metal ions of the bonded macrocycle and macrocycle in solution is only obtained when electron withdrawing groups are not attached to the macrocycle and when the macrocycle is not attached to the silica via one of the donor atoms of the macrocycle.

The data base for macrocycle-cation interaction can be used in choosing a macrocycle for recovering a particular cation. The selective removal and recovery of $Pb^{2+}$ and $Ba^{2+}$ from aqueous solutions using 18-crown-6 bonded to silica gel (see Formula IIA below) are examples of a suitable choice of macrocycle for a specific need. The data base measurements indicate that $Pb^{2+}$ and $Ba^{2+}$ are selectively complexed by 18-crown-6 by at least an order of magnitude over all other cations. The selectivity over cations often present in large excess (i.e. $Na^+$, $K^+$, $Mg^{2+}$, $Ca^{2+}$) is much greater. The equilibrium constant values in Table 1 confirm the suitability of the choice of 18-crown-6 as an appropriate macrocycle for the task. The 18-crown-6 bonded silica gel (see Formula IIA below) has been tested for its ability to remove $Pb^{2+}$ from $H_2O$. These data are presented in Table 2.

TABLE 2

The Reduction of $Pb^{2+}$ Concentrations in Aqueous Solution Using an 18-Crown-6 Bonded Silica Gel Column[a]

| Initial $Pb^{2+}$ Concentration (ppm) | Final $Pb^{2+}$ Concentration (ppb) | Volume of $Pb^{2+}$ Solution (ml) |
|---|---|---|
| 207[b] | less than 30[c] | 50 |
| 10[d] | less than 30[c] | greater than 250 |
| 20[e] | less than 30[c] | 100 |

Notes on Table 2

a) The cylindrical column used was 1.90 cm in diameter and contained a 3.5 cm height of the material. The gel capacity was 5.3 moles of macrocycle/$m^3$ silica gel.

b) $Mg^{2+}$ was also present at a concentration of 1 Molar.

c) 30 ppb is the detection limit of the atomic absorption spectrophotometer.

d) $Mg^{2+}$ and $Ca^{2+}$ were also present at 0.6 and 0.003 Molar, respectively.

e) $Mg^{2+}$ was also present at 0.7 Molar.

The dimensions and capacity of the small column used are given as footnotes to Table 2. The data in Table 2 show that great reductions in aqueous $Pb^{2+}$ concentrations can be achieved using the 18-crown-6 bonded silica gel column (see Formula IIA below) even when another cation is present in solution at much greater concentrations. Silica gel can interact with ions to some degree in and of itself. However, tests using

a plain silica gel column under conditions identical to those performed with the macrocycle bonded silica gel showed that the aqueous stream $Pb^{2+}$ concentration reduction were not as great. In particular, the plain silica gel column performed quite poorly under conditions where cations other than $Pb^{2+}$ were present at much greater concentrations than that of $Pb^{2+}$. The effect of silica gel or sand interaction with ions flowing through the column can be minimized by blocking the majority of the -OH sites present with trimethylsilyl groups.

The same 18-crown-6 bonded silica gel column (see Formula IIA below) has also been tested for its ability to selectively remove $Sr^{2+}$ from a solution containing 1 M $MgCl_2$ and 0.001 M $SrCl_2$. The molar concentrations of $Sr^{2+}$ in the aqueous stream coming out of the bottom of the column vs. the corresponding volumes of solution which have been flowed through the column are plotted as the exponential points in Figure 2. A predicted $Sr^{2+}$ concentration vs. volume plot is also shown (solid line). The predicted plot was obtained by numerically solving the partial differential mass balance equation for the column using the equilibrium constant for $Sr^{2+}$-macrocycle interaction. Similar tests with sand and silica gel columns which did not contain the bonded macrocycle showed that very little $Sr^{2+}$ could be removed from the aqueous source phase.

Once the desired ion(s) are attached to the silica gel column they must be removed using a small volume of a receiving phase so that a concentrated and purified product is obtained. In the $Pb^{2+}$ and $Sr^{2+}$ recovery tests described, 99% of the purified $Pb^{2+}$ and $Sr^{2+}$ was recovered from the column using 25 ml of a concentrated basic solution of either ethylenediamine tetraacetate (EDTA), citrate, or acetate. These reagents form stronger complexes with the ion(s) than the macrocycle does. Hence, they can effectively strip ion(s) from the macrocycle. These ion-receiving phase reagent complexes are easily broken by adding acid to the solution. These species can be recovered as a solid if desired. For example, the $Pb^{2+}$ can be recovered as a solid by using $H_2SO_4$ as the acid and, hence, precipitating $PbSO_4$.

An example of the use of these materials and processes is the quantitative and selective removal of undesired heavy metals such as $Pb^{2+}$ from blood. The silica-gel bonded macrocycle 18-crown-6 of the following formula IIA (formula II in which A-F = oxygen, n = 1, Z = silica-gel, X = $CH_3$ ) selectively complexes $Pb^{2+}$ over $K^+$, $Na^+$, $Ca^{2+}$, $Fe_3$ +, proteins and other materials necessary in the body by at least 2 orders of magnitude.

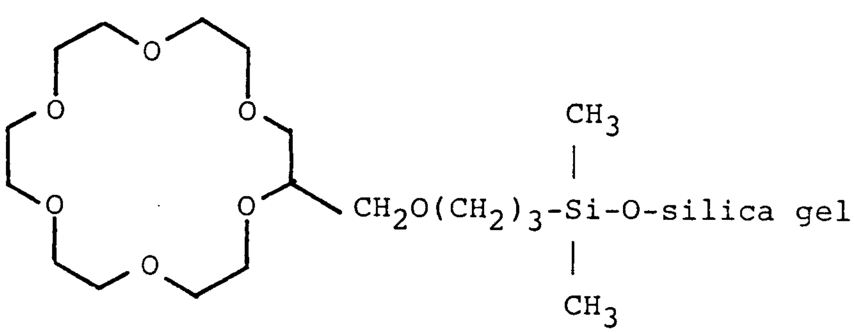

(IIA)

Although the invention has been described and illustrated by reference to certain specific macrocyclic ligands and processes of using them, analogs of these macrocycles are within the scope of the compounds and processes of the invention as defined in the following claims.

The Chemical Review 1985 Article referred to above gives data on certain carbon interactions with a number of compounds of the formula (A) given herein.

Formulae, cations the code for the ligand, log K data and the literature reference are given below in Table 3.

It should be noted that the pK values vary with the medium used to determine the interaction and this should be checked by reference to the review article and the original reference before reliance is placed on the specific numerical data given in Table 3 below.

However Table 3 indicates a range of specific macrocycle ligands and a range of cations with which they interact, to which ligands the present invention may be applied.

TABLE 3

| A | B | C | D | E | F | n | R | ligand | cation | log K | ref |
|---|---|---|---|---|---|---|---|---|---|---|---|
| NH | NH | O | - | - | O | -1 | | $A_2$12C4 | $Co^{2+}$ | 5.76 | 26 |
| | | | | | | | | | $Ni^{2+}$ | 5.91 | 26 |
| | | | | | | | | | $Cu^{2+}$ | 8.16 | 26 |
| | | | | | | | | | $Zn^{2+}$ | 6.22 | 26 |
| NH | NH | NH | - | - | NH | -1 | H | $A_4$12C4 | $Cu^{2+}$ | 24.8 | 28,31-34 |
| | | | | | | | | | $Zn^{2+}$ | 16.2 | 32 |
| | | | | | | | | | $Cd^{2+}$ | 14.3 | 32 |
| | | | | | | | | | $Hg^{2+}$ | 25.5 | 36 |
| | | | | | | | | | $Pb^{2+}$ | 15.9 | 32 |
| NH | NH | O | - | O | O | O | | 1,4-$A_2$15C5 | $Ni^{2+}$ | 5.05 | 26 |
| | | | | | | | | | $Cu^{2+}$ | 8.86 | 26 |
| | | | | | | | | | $Zn^{2+}$ | 5.04 | 26 |
| NH | O | NH | - | O | O | O | | 1,7-$A_2$15C5 (2.1) | $La^{3+}$ | 7.08 | 65 |
| | | | | | | | | | $La^{3+}$ | 14.4 | 65 |
| | | | | | | | | | $Pr^{3+}$ | 7.94 | 65 |
| | | | | | | | | | $Pr^{3+}$ | 14.5 | 65 |
| | | | | | | | | | $Ld^{3+}$ | 7.86 | 65 |
| | | | | | | | | | $Sm^{3+}$ | 7.00 | 65 |
| | | | | | | | | | $Sm^{3+}$ | 14.9 | 65 |
| | | | | | | | | | $Eu^{3+}$ | 8.59 | 65 |
| | | | | | | | | | $Eu^{3+}$ | 14.6 | 65 |
| | | | | | | | | | $Gd^{3+}$ | 7.67 | 65 |
| | | | | | | | | | $Tb^{3+}$ | 8.29 | 65 |
| | | | | | | | | | $Dy^{3+}$ | 8.96 | 65 |
| | | | | | | | | | $Dy^{3+}$ | 15.2 | 65 |
| | | | | | | | | | $Ho^{3+}$ | 8.81 | 65 |
| | | | | | | | | | $Er^{3+}$ | 8.70 | 65 |
| | | | | | | | | | $Er^{3+}$ | 14.8 | 65 |

| A | B | C | D | E | F | n | R | ligand | cation | log K | ref. |
|---|---|---|---|---|---|---|---|---|---|---|---|
| | | | | | | | | | $Y^{3+}$ | 8.66 | 65 |
| | | | | | | | | | $Tm^{3+}$ | 9.46 | 65 |
| | | | | | | | | | $Yb^{3+}$ | 15.4 | 65 |
| | | | | | | | | | $Co^{2+}$ | 5.05 | 77 |
| | | | | | | | | | $Co^{2+}$ | 5.22 | 26 |
| | | | | | | | | | $Ni^{2+}$ | 3.73 | 77 |
| | | | | | | | | | $Ni^{2+}$ | 4.05 | 26 |
| | | | | | | | | | $Cu^{2+}$ | 7.17 | 77 |
| | | | | | | | | | $Cu^{2+}$ | 8.15 | 26 |
| | | | | | | | | | $Zn^{2+}$ | 5.34 | 26 |
| | | | | | | | | | $Zn^{2+}$ | 5.19 | 77 |
| | | | | | | | | | $Ag^{+}$ | 5.85 | 77 |
| | | | | | | | | | $Cd^{2+}$ | 6.46 | 77 |
| S | O | O | - | O | O | O | | T15C5 | $Ag^{+}$ | 5.0 | 16 |
| | | | | | | | | | $Tl^{+}$ | 0.80 | 16 |
| | | | | | | | | | $Pb^{2+}$ | 1.65 | 16 |
| S | S | O | - | O | O | O | | 1,4-$T_2$15C5 | $Ag^{+}$ | 3.31 | 16 |
| | | | | | | | | | $Hg^{2+}$ | 5.1 | 16 |
| | | | | | | | | | $Tl^{+}$ | <0.6 | 16 |
| | | | | | | | | | $Pb^{2+}$ | 1.21 | 16 |
| S | O | S | - | O | O | O | | 1,7-$T_2$15C5 | $Ag^{+}$ | 2.7 | 16 |
| | | | | | | | | | $Hg^{2+}$ | 2.91 | 16 |
| | | | | | | | | | $Tl^{+}$ | <0.2 | 16 |
| | | | | | | | | | $Pb^{2+}$ | 1.62 | 16 |
| O | NH | S | - | S | NH | O | | 4,13-$A_2$-7, $T_2$15C5 | $Co^{2+}$ | 5.42 | 77,82,84 |
| | | | | | | | | | $Ni^{2+}$ | 7.98 | 77,82,84 |
| | | | | | | | | | $Cu^{2+}$ | 11.5 | 77,82,84 |
| | | | | | | | | | $Ag^{+}$ | 8.95 | 77,82 |
| | | | | | | | | | $Zn^{2+}$ | 5.09 | 77,82,84 |

| A | B | C | D | E | F | n | R | ligand | cation | log K | ref. |
|---|---|---|---|---|---|---|---|---|---|---|---|
| | | | | | | | | | $Cd^{2+}$ | 6.53 | 77,82 |
| | | | | | | | | | $Pb^{2+}$ | 5.67 | 77,82,84 |
| O | S | NH | - | NH | S | O | | 7,10-$A_2$-4, 13-$T_2$15C5 | $Co^{2+}$ | 5.22 | 82,83 |
| | | | | | | | | | $Ni^{2+}$ | 8.06 | 82,83 |
| | | | | | | | | | $Cu^{2+}$ | 13.26 | 82,83,85 |
| | | | | | | | | | $Ag^{+}$ | 9.91 | 82,83 |
| | | | | | | | | | $Zn^{2+}$ | 4.43 | 82,83 |
| | | | | | | | | | $Cd^{2+}$ | 7.13 | 82,83 |
| | | | | | | | | | $Pb^{2+}$ | 6.78 | 82,83,85 |
| NH | O | NH | O | O | O | 1 | | 1,7-$A_2$18C6 | $Co^{2+}$ | 3.26 | 26 |
| | | | | | | | | | $Ni^{2+}$ | 3.21 | 26 |
| | | | | | | | | | $Cu^{2+}$ | 7.40 | 26 |
| | | | | | | | | | $Zn^{2+}$ | 4.26 | 26 |
| NH | O | O | NH | O | O | 1 | | 1,10-$A_2$18C6 (2.2) | $Li^{+}$ | 1.07 | 87 |
| | | | | | | | | | $Na^{+}$ | 4.30 | 90 |
| | | | | | | | | | $K^{+}$ | 4.32 | 90 |
| | | | | | | | | | $Rb^{+}$ | 3.37 | 90 |
| | | | | | | | | | $Ca^{+}$ | 2.48 | 90 |
| | | | | | | | | | $Sr^{2+}$ | 2.57 | 99 |
| | | | | | | | | | $Ba^{2+}$ | 2.98 | 99 |
| | | | | | | | | | $La^{3+}$ | 6.18 | 87 |
| | | | | | | | | | $Co^{2+}$ | >3.5 | 87 |
| $NCH_3$ | O | O | $NCH_3$ | O | O | 1 | | $Me_2A_2$18C6 | $Na^{+}$ | 3.7 | 134 |
| | | | | | | | | | $K^{+}$ | 5.3 | 134 |
| | | | | | | | | | $Rb^{+}$ | 4.3 | 134 |
| | | | | | | | | | $Ca^{2+}$ | 4.4 | 134 |
| | | | | | | | | | $Sr^{2+}$ | 6.1 | 134 |
| | | | | | | | | | $Ba^{2+}$ | 6.7 | 134 |

| A | B | C | D | E | F | n | R | ligand | cation | log K | ref. |
|---|---|---|---|---|---|---|---|---|---|---|---|
| A | O | O | D | O | O | | | $(HOE)_2A_2$18C6 | $Na^+$ | <2 | 88 |
| A = D = N — $CH_2$ — $CH_2$ — OH | | | | | | | | | $K^+$ | <2 | 88 |
| | | | | | | | | | $Mg^{2+}$ | <2 | 88 |
| | | | | | | | | | $Ca^{2+}$ | 4.08 | 88 |
| | | | | | | | | | $Cu^{2+}$ | 6.60 | 88 |
| | | | | | | | | | $Ag^+$ | 7.27 | 88 |
| | | | | | | | | | $Cd^{2+}$ | 7.96 | 88 |
| | | | | | | | | | $Pb^{2+}$ | 9.20 | 88 |
| NH | NH | O | NH | NH | O | 1 | | $A_4$18C6 | $Co^{2+}$ | 9.68 | 26 |
| | | | | | | | | | $Ni^{2+}$ | 12.49 | 26 |
| S | O | O | O | O | O | 1 | | T18C6 | $Na^+$ | 2.57 | 61 |
| | | | | | | | | | $K^+$ | 3.61 | 61 |
| | | | | | | | | | $Rb^+$ | 2.99 | 135a |
| | | | | | | | | | $Ba^{2+}$ | 3.4 | 61 |
| | | | | | | | | | $Ag^+$ | >5.5 | 61 |
| S | S | O | O | O | O | 1 | | 1,4-$T_2$18C6 | $Ag^+$ | 3.0 | 16 |
| | | | | | | | | | $Tl^+$ | 1.38 | 16 |
| | | | | | | | | | $Pb^{2+}$ | 2.63 | 16 |
| S | O | O | S | O | O | 1 | | 1,10-$T_2$18C6 | $K^+$ | 1.15 | 11. |
| | | | | | | | | | $Ag^+$ | 4.34 | 11,25 |
| | | | | | | | | | $Tl^+$ | 0.93 | 16 |
| | | | | | | | | | $Pb^{2+}$ | 3.13 | 16 |

## Claims

**1.** A composition of matter comprising silica covalently bonded to a macrocyclic compound and having the formula I, II, III, IV or V below:

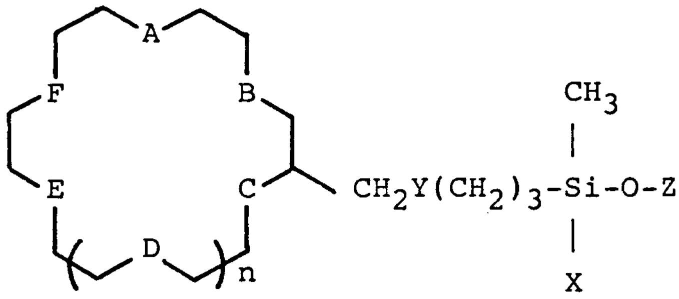

(I)

in which A to F each separately represent an oxygen atom or a sulphur atom or an N-R group in which R represents a hydrogen atom or an alkyl group or an aryl group, n is 0, 1, 2, 3 or 4, Z represents silica or silica gel and X represents an alkyl group or an aryl group or an alkoxyl group or a halogen atom or an O-silica group or an O-silica gel group, and Y represents an oxygen atom or a $CH_2$ group; or

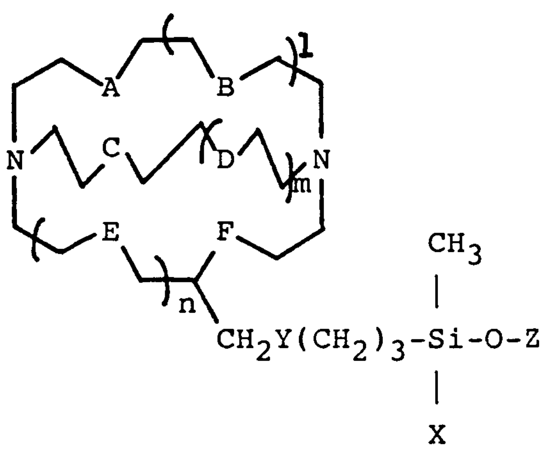

(II)

in which A to F each separately represent an oxygen atom or a sulphur atom or an N-R group in which R represents a hydrogen atom or an alkyl group or an aryl group, l, m and n are 0, 1 or 2, Z represents silica or silica gel, X represents an alkyl group, or an aryl group or an alkoxyl group or a halogen atom or an O-silica group or an O-silica gel group, and Y represents an oxygen atom or a $CH_2$ group; or

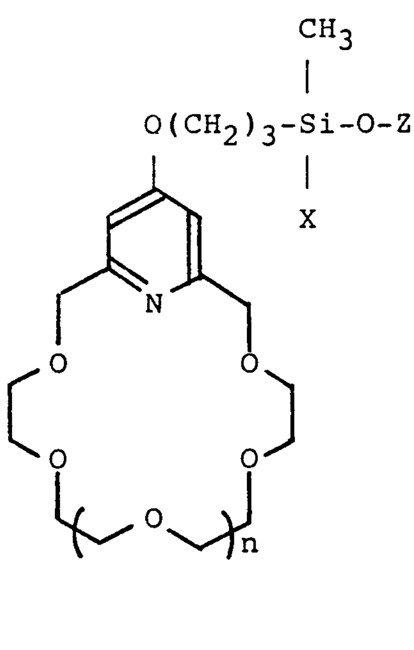

(III)

in which n is 0, 1 or 2, Z represents silica or silica gel, X represents an alkyl group or an aryl group or an alkoxy group or a halogen atom or an O-silica group or an O-silica gel group, and Y represents an oxygen atom or a $CH_2$ group; or

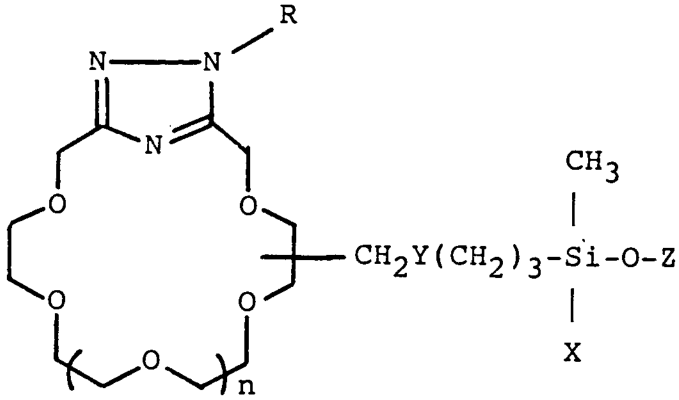

(IV)

in which n is 0, 1 or 2, Z represents silica or silica gel, R represents an alkyl group or an aryl group, X represents an alkyl group or an aryl group or an alkoxyl group or a halogen atom or an O-silica group or an O-silica gel group, and Y represents an oxygen atom or a $CH_2$ group; or

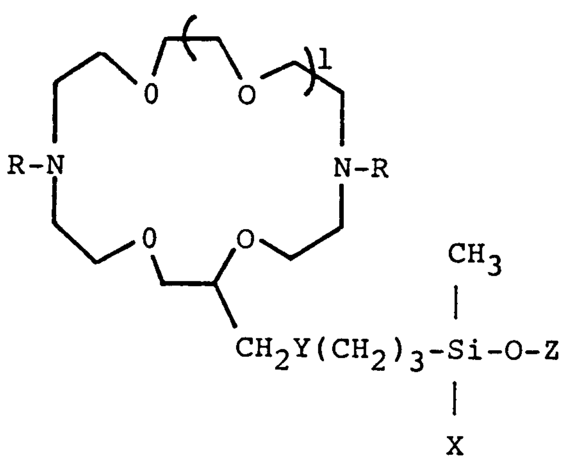

(V)

in which l is 0, 1 or 2, Z represents silica or silica gel, R represents a hydrogen atom or an alkyl group or an aryl group, X represents an alkyl group or an aryl group or an alkoxyl group or a halogen atom or an O-silica group or an O-silica gel group, and Y represents an oxygen atom or a $CH_2$ group.

**2.** A composition of matter as claimed in Claim 1 in which silica represents sand.

**3.** A composition of matter as claimed in Claim 1 or Claim 2 in which in Formula I, A to F each represent an oxygen atom, n is 0, 1 or 2 and X represents a methyl group or a chlorine atom or an O-silica group or an O-silica gel group, and in Formula II, A to F each represent an oxygen atom, l, m and n each are 1, and X represents a methyl group or a chlorine atom or an O-silica group or an O-silica gel group.

**4.** A composition of matter as claimed in Claim 1 or Claim 2 in which in Formula 1, A, C, D and F each represent an oxygen atom and B and E each represent any N-R group in which R represents a hydrogen atom or any alkyl group or any benzyl group, n is 0, 1 or 2, and X represents a methyl group or a chlorine atom or an O-silica group or an O-silica gel group.

**5.** A composition as claimed in Claim 1 or Claim 2 in which in Formula II, A to F each represent an oxygen atom, m and n each are 1 and l is 0, 1 or 2 and X represents a methyl group or a chlorine atom

or an O-silica gel group and Z represents an O-silica gel group.

6. Ion-separation apparatus containing as the separation medium a composition of matter as claimed in any one of Claims 1 to 5.

7. A process of separating a selected ion from a plurality of other ions in a multiple ion solution characterised by contacting the multiple ion solution with a composition of matter as claimed in any one of Claims 1 to 5 under conditions which cause the said composition of matter to complex with the selected ion and remove it from the said multiple ion solution, separating the said multiple ion solution from which the said selected ion has been removed from the said complex, and breaking the said complex to free and recover the said selected ion in a receiving liquid.

8. A composition of matter comprising silica covalently bonded to a macrocyclic compound and having the formula below:

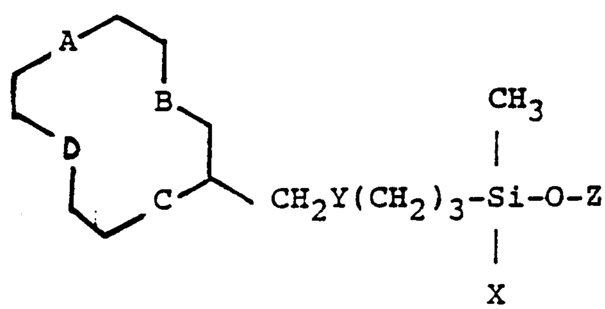

in which A to D each separately represent an oxygen atom or a sulphur atom or an N-R group in which R represents a hydrogen atom or an alkyl group or an aryl group, Z represents silica or silica gel and X represents an alkyl group or an aryl group or an alkoxyl group or a halogen atom or an O-silica group or an O-silica gel group, and Y represents an oxygen atom or a $CH_2$ group.

**Revendications**

1. Composition de matière comprenant une silice liée de façon covalente à un composé macrocyclique et avant les formules I, II, III, IV ou V ci-dessous:

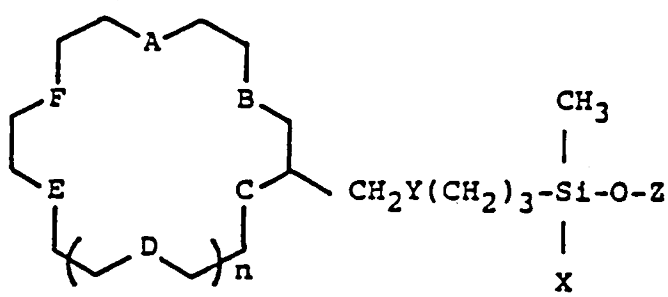

(I)

dans laquelle A à F représentent chacun séparément un atome d'oxygène ou un atome de soufre ou un groupe N-R dans lequel R représente un atome d'hydrogène ou un groupe alkyle ou un groupe aryle, n est 0, 1, 2, 3 ou 4, Z représente une silice ou un gel de silice et X représente un groupe alkyle ou un groupe aryle ou un groupe alkoxyle ou un atome d'halogène ou un groupe O-silice ou un groupe O-gel de silice, et Y représente un atome d'oxygène ou un groupe $CH_2$; ou

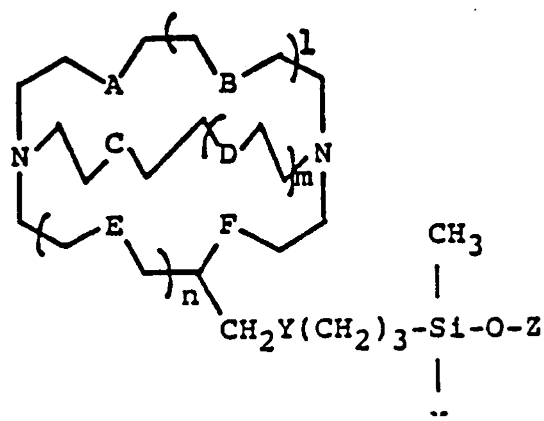

(II)

dans laquelle A à F représentent chacun séparément un atome d'oxygène ou un atome de soufre ou un groupe N-R dans lequel R représente un atome d'hydrogène ou un groupe alkyle ou un groupe aryle, l, m, et n sont 0, 1 ou 2, Z représente une silice ou un gel de silice, X représente un groupe alkyle, ou un groupe aryle ou un groupe alkoxyle ou un atome d'halogène ou un groupe O-silice ou un groupe O-gel de silice, et Y représente un atome d'oxygene ou un groupe $CH_2$: ou

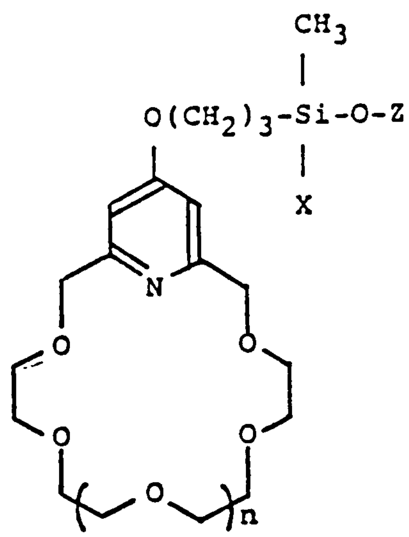

(III)

dans laquelle n est 0, 1 ou 2, Z représente une silice ou un gel de silice, X représente un groupe alkyle ou un groupe aryle ou un groupe alkoxy ou un atome d'halogène ou un groupe O-silice ou un groupe O-gel de silice, et Y un atome d'oxygène ou un groupe $CH_2$; ou

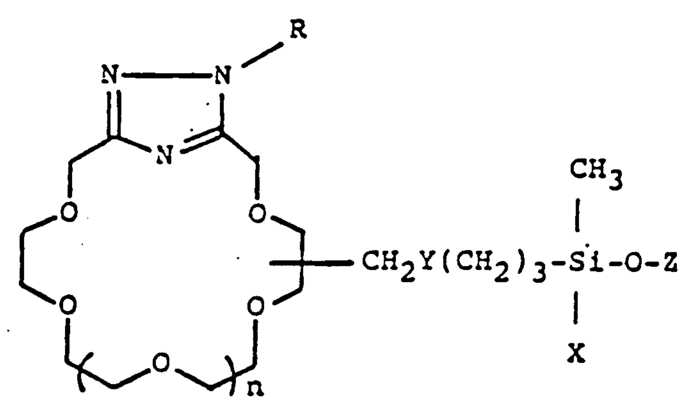

(IV)

dans laquelle n est 0, 1 ou 2, Z représente une silice ou un gel de silice, R représente un groupe alkyle ou un groupe aryle, X représente un groupe alkyle ou un groupe aryle ou un groupe alkoxyle ou un atome d'halogène ou un groupe O-silice ou un groupe O-gel de silice, et Y représente un atome d'oxygène ou un groupe $CH_2$; ou

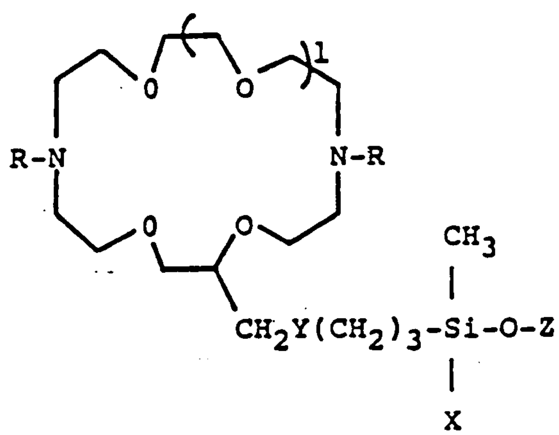

(V)

dans laquelle l est 0, 1 ou 2, Z représente une silice ou un gel de silice, R représente un atome d'hydrogène ou un groupe alkyle ou un groupe aryle, X représente un groupe alkyle ou un groupe aryle ou un groupe alkoxyle ou un atome d'halogène ou un groupe O-silice ou un groupe O-gel de silice, et Y représente un atome d'oxygène ou un groupe $CH_2$.

2. Composition de matière selon la revendication 1, dans laquelle la silice représente du sable.

3. Composition de matière selon la revendication 1 ou 2, dans laquelle dans la formule I, A à F représentent chacun un atome d'oxygène, n est 0, 1 ou 2 et X représente un groupe méthyle ou un atome de chlore ou un groupe O-silice ou un groupe O-gel de silice, et dans la formule II, A à F représentent chacun un atome d'oxygène, l, m et n sont chacun 1, et X représente un groupe méthyle ou un atome de chlore ou un groupe O-silice ou un groupe O-gel de silice.

4. Composition de matière selon la revendication 1 ou 2, dans laquelle dans la formule 1, A, C, D et F représentent chacun un atome d'oxygène et B et E représentent chacun tout groupe N-R dans lequel R représente un atome d'hydrogène ou tout groupe alkyle ou tout groupe benzyle, n est 0, 1 ou 2, et X représente un groupe méthyle ou un atome de chlore ou un groupe O-silice ou un groupe O-gel de silice.

5. Composition selon la revendication 1 ou 2, dans laquelle dans la formule II, A à F representent chacun un atome d'oxygène, m et n sont chacun 1 et l est 0, 1 ou 2 et X représente un groupe méthyle ou un atome de chlore ou un groupe O-gel de silice et Z représente un groupe O-gel de silice.

6. Appareil de séparation d'ions contenant comme milieu de séparation une composition de matière selon l'une quelconque des revendications 1 à 5.

7. Procédé de séparation d'un ion choisi parmi un ensemble d'autres ions dans une solution d'ions multiples, caractérisé par la mise en contact de la solution d'ions multiples avec une composition de matière selon l'une quelconque des revendications 1 à 5 dans des conditions qui entraînent que ladite composition de matière à se complexer avec l'ion choisi et à l'éliminer de ladite solution d'ions multiples, la séparation de ladite solution d'ions multiples à partir de laquelle ledit ion choisi a été éliminé dudit complexe, et la rupture dudit complexe pour libérer et récupérer ledit ion choisi dans un liquide récepteur.

8. Composition de matière comprenant une silice liée de façon covalente à un composé macrocyclique et ayant la formule ci-dessous:

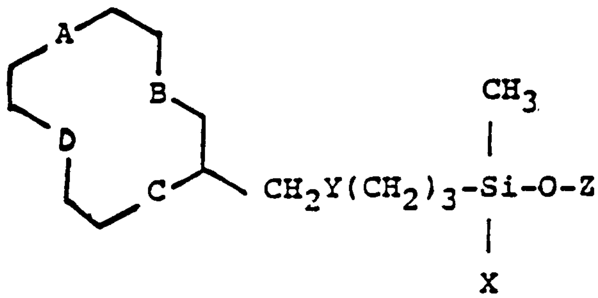

dans laquelle A à D représentent chacun séparément un atome d'oxygène ou un atome de soufre ou un groupe N-R dans lequel R représente un atome d'hydrogène ou un groupe alkyle ou un groupe aryle, Z représente une silice ou un gel de silice et X représente un groupe alkyle ou un groupe aryle ou un groupe alkoxyle ou un atome d'halogène ou un groupe O-silice ou un groupe O-gel de silice, et Y représente un atome d'oxygène ou un groupe $CH_2$.

**Patentansprüche**

1. Materialzusammensetzung, welche Covalent an eine makrozyklische Verbindung gebundenes Siliziumdioxid enthält und die nachstehende Formel I, II, III, IV oder V aufweist,

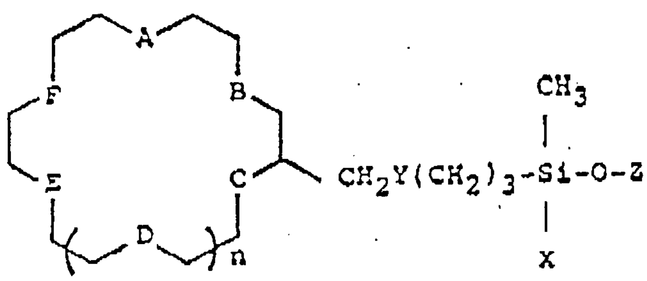

(I)

worin A bis F jeweils getrennt ein Sauerstoffatom oder ein Schwefelatom oder eine Gruppe N-R darstellen, worin R ein Wasserstoffatom oder eine Alkylgruppe oder eine Arylgruppe darstellt, n 0, 1, 2, 3 oder 4 ist, Z Siliziumdioxid oder Kieselgel darstellt und X eine Alkylgruppe oder eine Arylgruppe oder eine Alkoxylgruppe oder ein Halogenatom oder eine O-Siliziumdioxidgruppe oder eine O-Kieselgelgruppe darstellt und Y ein Sauerstoffatom oder eine $CH_2$-Gruppe darstellt; oder

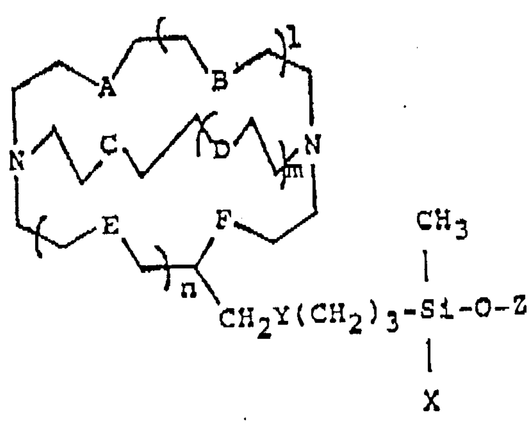

(II)

worin A bis F jeweils getrennt ein Sauerstoffatom oder ein Schwefelatom oder eine Gruppe N-R darstellen, worin R ein Wasserstoffatom oder eine Alkylgruppe oder eine Arylgruppe darstellt, l, m und n 0, 1 oder 2 sind, Z Siliziumdioxid oder Kieselgel darstellt, X eine Alkylgruppe oder eine Arylgruppe

oder eine Alkoxylgruppe oder ein Halogenatom oder eine O-Siliziumdioxidgruppe oder eine O-Kieselgelgruppe darstellt und Y ein Sauerstoffatom oder eine $CH_2$-Gruppe darstellt; oder

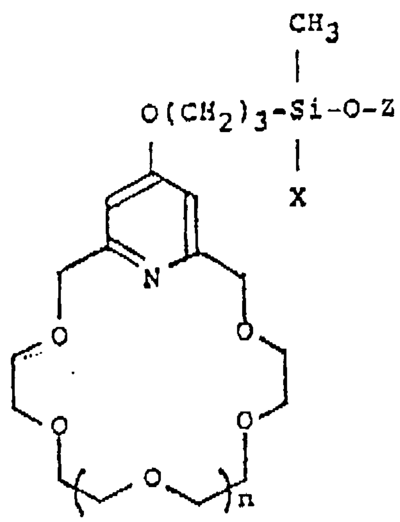

(III)

worin n 0, 1 oder 2 ist, Z Siliziumdioxid oder Kieselgel darstellt, X eine Alkylgruppe oder eine Arylgruppe oder eine Alkoxygruppe oder ein Halogenatom oder eine O-Siliziumdioxidgruppe oder eine O-Kieselgelgruppe darstellt und Y ein Sauerstoffatom oder eine $CH_2$-Gruppe darstellt; oder

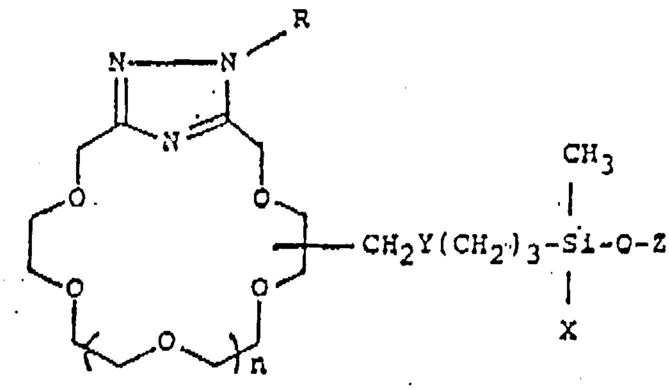

(IV)

worin n 0, 1 oder 2 ist, Z Siliziumdioxid oder Kieselgel darstellt, R eine Alkylgruppe oder eine Arylgruppe darstellt, X eine Alkylgruppe oder eine Arylgruppe oder eine Alkoxylgruppe oder ein Halogenatom oder eine O-Siliziumdioxidgruppe oder eine O-Kieselgelgruppe darstellt und Y ein Sauerstoffatom oder eine $CH_2$-Gruppe darstellt; oder

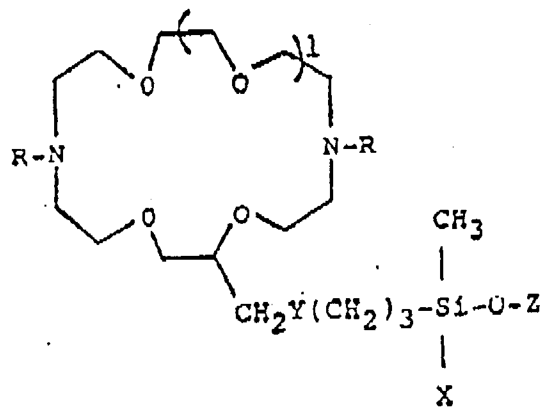

(V)

worin l 0, 1 oder 2 ist, Z Siliziumdioxid oder Kieselgel darstellt, R ein Wasserstoffatom oder eine Alkylgruppe oder eine Arylgruppe darstellt, X eine Alkylgruppe oder eine Arylgruppe oder eine Alkoxylgruppe oder ein Halogenatom oder eine O-Siliziumdioxidgruppe oder eine O-Kieselgelgruppe darstellt und Y ein Sauerstoffatom oder eine $CH_2$-Gruppe darstellt.

**2.** Materialzusammensetzung nach Anspruch 1, worin Siliziumdioxid für Sand steht.

**3.** Materialzusammensetzung nach Anspruch 1 oder 2, worin in Formel I A-F jeweils ein Sauerstoffatom darstellen, n 0, 1 oder 2 darstellen und X eine Methylgruppe oder ein Chloratom oder eine O-Siliziumdioxidgruppe oder eine O-Kieselgelgruppe darstellen, und in Formel II A-F jeweils ein Sauerstoffatom darstellen, l, m und n jeweils 1 sind und X eine Methylgruppe oder ein Chloratom oder eine O-Siliziumdioxidgruppe oder eine O-Kieselgelgruppe darstellt.

**4.** Materialzusammensetzung nach Anspruch 1 oder 2, worin in Formel I A, C, D und F jeweils ein Sauerstoffatom darstellen und B und E jeweils eine beliebie Gruppe N-R darstellen, worin R ein Wasserstoffatom oder eine beliebige Alkylgruppe oder eine beliebige Benzylgruppe darstellt, n 0, 1 oder 2 ist und X eine Methylgruppe oder ein Chloratom oder eine O-Siliziumdioxidgruppe oder eine O-Kieselgelgruppe darstellt.

**5.** Zusammensetzung nach Anspruch 1 oder 2, worin in Formel II A-F jeweils ein Sauerstoffatom darstellen, m und n jeweils l sind und l 0, 1 oder 2 ist und X eine Methylgruppe oder ein Chloratom oder eine O-Kieselgelgruppe darstellt und Z eine O-Kieselgelgruppe darstellt.

**6.** Ionentrennvorrichtung, welche als Trennmedium eine Materialzusammensetzung nach einem der Ansprüche 1 bis 5 enthält.

**7.** Verfahren zur Abtrennung eines ausgewählten Ions aus einer Vielzahl anderer Ionen in eine vielionigen Lösung, gekennzeichnet durch das in Berührungbringen der vielionigen Lösung mit einer Materialzusammensetzung, wie sie in einem der Ansprüchs 1 bis 5 beansprucht ist, unter Bedingungen, die die Materialzusammensetzung veranlasen, das ausgewählte Ion zu komplexieren und es aus der vielionigen Lösung zu entfernen, des Abtrennen der vielionigen Lösung, aus der das ausgewählte Ion mit dem Komplex entfernt worden ist, und das Aufbrechen des Komplexes zur Freisetzung und Gewinnung des ausgewählten Ions in einer aufnehmenden Flüssigkeit.

**8.** Materialzusammensetzung, welche Covalent an eine mekrozyklische Verbindung gebundenen Siliziumdioxid enthält und die nachstehende Formel aufweist

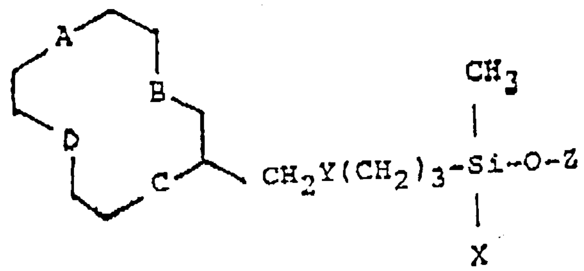

worin A-D jeweils für sich ein Sauerstoffatom oder ein Schwefelatom oder eine Gruppe N-R darstellen, worin R ein Wasserstoffatom oder eine Alkylgruppe oder eine Arylgruppe darstellen, Z Siliziumdioxid oder Kieselgel darstellt und X eine Alkylgruppe oder eine Arylgruppe oder eine Alkoxylgruppe oder ein Halogenatom oder eine O-Siliziumdioxidgruppe oder eine O-Kieselgelgruppe darstellt und Y ein Sauerstoffatom oder eine $CH_2$-Gruppe darstellt.

Fig. 1

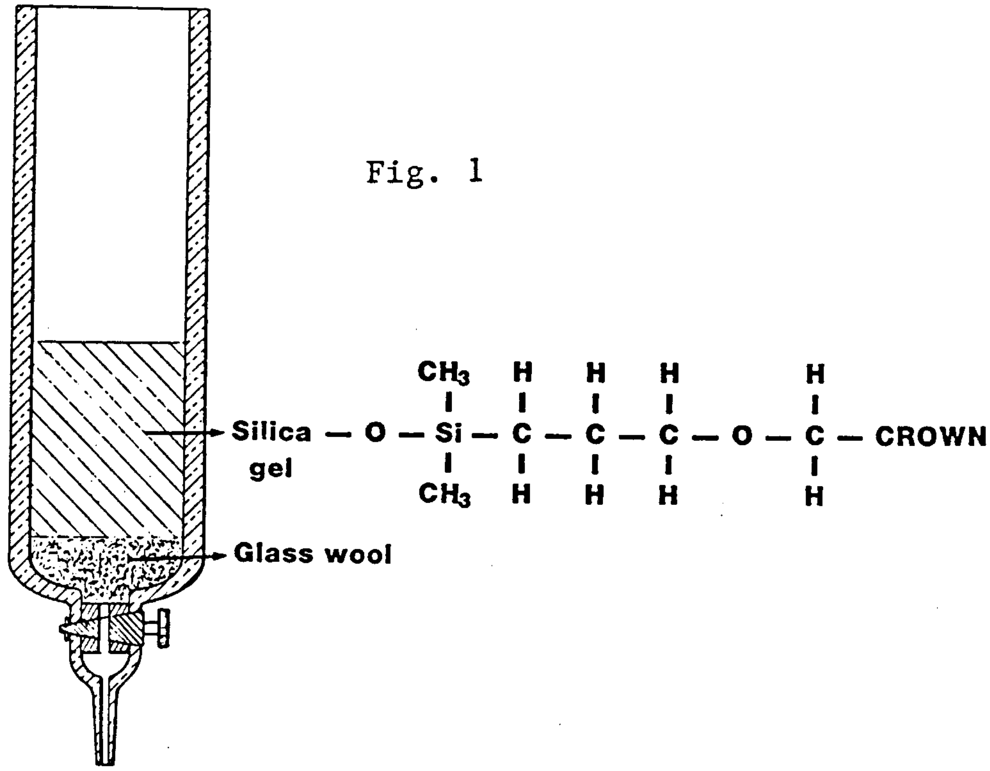


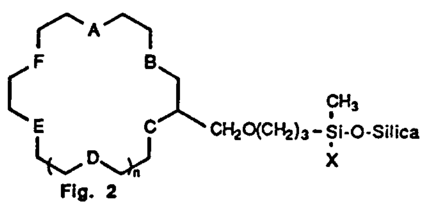

Fig. 2

A-F = any combination of O or S or N-R (R = H or any alkyl or benzyl); n = 0-4; X = any alkyl or Cl or O-Silica.

A-F = O; n = 0-2; X = $CH_3$ or Cl or O-Silica.

A,C,D,F = O; B and E = N-R (R = H or alkyl or benzyl); n = 0-2; X = $CH_3$ or Cl or O-Silica.

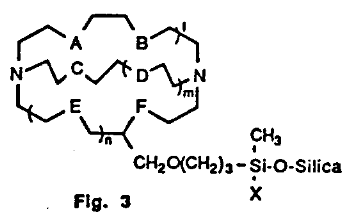

Fig. 3

A-F = any combination of O or S or N-R (R = H or any alkyl or benzyl); l, m, n = 0-2; X = any alkyl or Cl or O-Silica.

A-F = O; l = m = n = 1; X = $CH_3$ or Cl or O-Silica

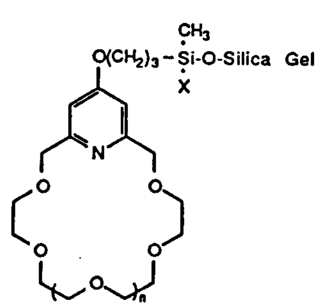

Fig. 4

n = 0-2; X = $CH_3$ or Cl or O-Silica

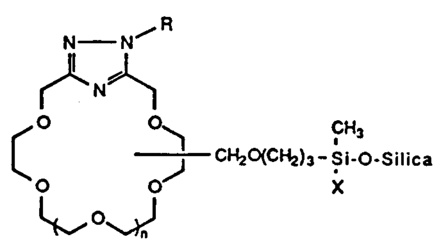

Fig. 5

n = 0-2; R = any alkyl;
X = $CH_3$ or Cl or O-Silica

Fig. 2 Plot of the concentration of strontium in a solution originally containing 0.001 M Sr and 1 M Mg coming out of the bottom of the column which contains bonded 18C6 vs. the total volume of the solution which has been flowed through the column.